# EUROPÄISCHE PATENTSCHRIFT

(11) **EP 1 640 341 B1**
(45) Veröffentlichungstag und Bekanntmachung des Hinweises auf die Patenterteilung: **16.12.2009**
(21) Anmeldenummer: 05017727.8
(22) Anmeldetag: 16.08.2005
(51) Int. Cl.: C01B 31/28, B01J 7/00, B01J 8/06, B01J 19/00

(54) **Verfahren und Vorrichtung zur Herstellung von Phosgen**
Method and device for preparing phosgene
Procédé et dispositif pour la préparation de phosgene

(30) Priorität: 28.08.2004 DE 102004041777
(43) Veröffentlichungstag der Anmeldung: 29.03.2006
(73) Patentinhaber: Bayer MaterialScience AG, 51368 Leverkusen (DE)
(72) Erfinder: Keggenhoff, Berthold, Dr., 47839 Krefeld (DE); Lokum, Heinrich, 50170 Kerpen (DE); Münnig, Jürgen, 41564 Kaarst (DE)

(56) Entgegenhaltungen:
- WO-A-03/072237
- FR-A- 2 345 394
- GB-A- 583 477
- US-A- 4 764 308
- US-A- 6 054 612

## Beschreibung

Die Erfindung betrifft ein Verfahren zur Herstellung von Phosgen durch Umsetzung von Kohlenmonoxid (CO) und Chlor an Aktivkohle in einem Rohrbündelreaktor, wobei die Abfuhr der Reaktionswärme durch Verdampfungskühlung mit Wasser bei vermindertem Druck erfolgt. Die Erfindung betrifft auch eine Vorrichtung zur Herstellung von Phosgen umfassend einen Rohrbündelreaktor, einen Dampf-/Wasserabscheider, einen Wärmeaustauscher (Kondensator), eine verschließbare Vakuumleitung sowie wenigstens eine Überwachungseinrichtung, mit der ein Übertritt von Phosgen in den Kühlmittelkreislauf detektiert werden kann.

Die Herstellung von Phosgen aus CO und Chlor an Aktivkohle-Katalysatoren in einem Rohrbündelreaktor ist aus dem Stand der Technik bekannt (s. z.B. Ullmann's Encyclopedia of Industrial Chemistry, 5th ed. Vol. A 19 p. 413 f., VCH Verlagsgesellschaft mbH, Weinheim, 1991). Eine wesentliche Aufgabenstellung in diesem Verfahren ist die sichere Abfuhr der erheblichen Reaktionswärme, die üblicherweise durch Direktkühlung erfolgt. Allerdings wird auch Verdampfungskühlung in der Literatur erwähnt. So erwähnt die US-A-4,231,959 neben der Direktkühlung mit Wasser auch die Kühlung mit kochendem Wasser, wobei nutzbarer Dampf erzeugt wird. EP-A-134 506 beschreibt die Phosgenerzeugung unter Siedekühlung mit einem hochsiedenden Medium, das anschließend zur Erzeugung von Nutzdampf verwendet wird. Dort wird auch generell die Verdampfungskühlung als Verfahren erwähnt. Gleichzeitig wird aber dargelegt, dass zur Erzielung des erforderlichen niedrigen Chlorgehalts von unter 50 ppm im Phosgen eine Gastemperatur im Reaktorausgang von unter 100°C erzielt werden muss. Daher wird das Verfahren dieser Erfindung auch zweistufig durchgeführt, wobei die erste Stufe bei hoher Temperatur und Verdampfungskühlung mit einem hochsiedenden Kühlmittel und die zweite Stufe bei 70 bis 100°C unter Direktkühlung durchgeführt wird. Schließlich beschreibt WO-A-03/072237 einen Reaktor und ein Verfahren zur Herstellung von Phosgen, wobei der Reaktor bei spezieller Rohranordnung mit einem flüssigen Kühlmittel, Monochlorbenzol, gekühlt wird. Für die Reaktorrohre wird aus Korrosionsgründen Edelstahl vorgeschrieben. Dabei wird die Problematik beschrieben, dass bei ungleichmäßiger oder unzureichender Kühlung Korrosion auftreten kann.

### Verfahrenstechnisch stellen sich daher bei der Phosgenherstellung die folgenden Aufgaben:

Einerseits ist eine sichere und gleichmäßige Wärmeabfuhr mit bestmöglichen Wärmeübergangskoeffizienten so sicherzustellen, dass eine Gastemperatur von unter 100°C im Reaktoraustritt eingestellt und dadurch ein Chlorgehalt im erzeugten Phosgen von unter 50 ppm erhalten wird. Andererseits sind sicherheitstechnische Probleme zu lösen, die sich ergeben, wenn es durch Korrosionsschäden zu einem Übertritt von Wärmeträgermedium in den Reaktionsraum kommen sollte. Dabei ist Wasser als Wärmeträger sicherheitstechnisch problematisch, weil es bei Eintritt in den Reaktionsraum, z.B. durch ein durch Korrosion hervorgerufenes Loch in einem Reaktionsrohr, mit dem gebildeten Phosgen am Aktivkohlekatalysator sehr heftig reagiert, wobei Salzsäure entsteht, die ihrerseits weitere Korrosion verursacht.

Die Aufgabe der vorliegenden Erfindung ist daher, ein Verfahren und eine Vorrichtung zur Herstellung von Phosgen bereit zu stellen, mit dem durch effiziente Wärmeabfuhr eine Gastemperatur von unter 100°C und eine Konzentration von Chlor im Phosgen von unter 50 ppm am Austritt aus dem Reaktor gewährleistet werden kann und das gleichzeitig sicher betrieben werden kann.

Die Erfindung betrifft ein Verfahren zur Herstellung von Phosgen, bei dem Chlor und Kohlenmonoxid in Gegenwart eines Aktivkohle-Katalysators in einem Rohrbündelreaktor enthaltend mehrere Reaktionsrohre und einen die Reaktionsrohre umgebenden Kühlmittelraum umgesetzt werden, dadurch gekennzeichnet, dass
a) die Reaktionsrohre von außen durch den Kühlmittelraum mit Wasser durch Verdampfungskühlung gekühlt werden, und
b) die Reaktionsrohre bei einem Druck betrieben werden, der oberhalb des Drucks in dem Kühlmittelraum liegt.

Das erfindungsgemäße Verfahren zeichnet sich somit dadurch aus, dass die Abfuhr der Reaktionswärme bei der Phosgenherstellung durch Verdampfungskühlung mit Wasser bei vermindertem Druck, bevorzugt unterhalb atmosphärischem Druck von 1 bar absolut, erfolgt.

Der Kühlmittelkreislauf ist dabei bevorzugt ein geschlossener Kreislauf, in dem Wasser verdampft, abgeleitet, an einer anderen Stelle kondensiert und anschließend zur erneuten Verdampfung in den Kühlmittelraum zurückgeleitet wird. Der Kühlmittelraum enthält dabei bevorzugt zu jeder Zeit flüssiges Wasser im Siedezustand.

Dabei wird der Druck des Reaktionsraums oberhalb des Drucks des Kühlmittelraums gehalten, so dass im Schadensfall Phosgen in den Kühlmittelraum, aber kein Wasser in den Produktraum eintritt. Der Kühlmittelraum wird mittels geeigneter Überwachungseinrichtungen auf einen solchen Schadensfall überwacht, wodurch Folgeschäden vermieden werden.

Die Einsatzströme CO und Chlor werden in dem erfindungsgemäßen Verfahren zur Erzielung eines niedrigen Chlorgehaltes im Phosgen bevorzugt mit einem molaren Überschuss an CO von 2 bis 20 %, besonders bevorzugt 5 bis 12 % eingesetzt. Als Gasmischer kann jeder handelsübliche Gasmischer, wie Blendenmischer, Statikmischer oder Drallmischer eingesetzt werden, bei entsprechender Leitungsführung ist ein spezieller Gasmischer aber ggf. auch entbehrlich. Der absolute Druck des Mischgases beträgt dabei bevorzugt 1,5 bis 10 bar, besonders bevorzugt 2 bis 5 bar.

Durch geeignete Wahl des Kühlmitteldrucks wird die Kühlmitteltemperatur und in der Folge die Produktaustrittstemperatur sicher unter 100 °C gehalten. Die Kühlung des Rohrbündelreaktors über den Kühlmittelraum und den daran über die Eintrittsöffnung und die Austrittsöffnung angeschlossenen Wasserkreislauf erfolgt bevorzugt mit Wasser bei einem absoluten Druck von 0,1 bis 0,8 bar, besonders bevorzugt 0,15 bis 0,5 bar, ganz besonders bevorzugt 0,2 bis 0,3 bar. Daraus ergeben sich Siedetemperaturen des Wassers von 45 bis 93,5°C (bei 0,1 bis 0,8 bar), 55 bis 80°C (bei 0,15 bis 0,5 bar) bzw. 60 bis 70°C (bei 0,2 bis 0,3 bar). Dadurch wird erreicht, dass Phosgen mit einer Temperatur von unter 100°C aus dem Rohrbündelreaktor austritt.

Der absolute Druck in den Reaktionsrohren beträgt bevorzugt 1,5 bis 10 bar, besonders bevorzugt 2 bis 5 bar.

Das erfindungsgemäße Verfahren kann beispielsweise in der nachfolgend beschriebenen Vorrichtung durchgeführt werden.

Die Erfindung betrifft auch eine Vorrichtung zur Herstellung von Phosgen durch Umsetzung von Chlor und Kohlenmonoxid in Gegenwart eines Aktivkohle-Katalysators, enthaltend
a) einen Rohrbündelreaktor (20), der mehrere im Wesentlichen parallel zueinander angeordnete Reaktionsrohre (21), einen die Reaktionsrohre (21) umgebenden Kühlmittelraum (27) für Wasser mit mindestens einer Eintrittsöffnung (13) für Wasser und mindestens einer Austrittsöffnung (14) für Wasser bzw. Wasserdampf umfasst, sowie
b) einen Wasserkreislauf (26) umfassend einen mit der Austrittsöffnung (14) über eine Leitung (6) hydraulisch verbundenen Dampf-/Wasserabscheider (22), eine Rückführungsleitung (5) für das im Dampf-/Wasserabscheider (22) abgeschiedene Wasser zur Eintrittsöffnung (13), einen Wärmeaustauscher (23), der über eine Dampfleitung (7) hydraulisch mit dem Dampf-/Wasserabscheider (22) verbunden ist und in dem der im Dampf-/Wasserabscheider (22) abgeschiedene Dampf kondensiert wird, sowie eine Rückführungsleitung (8) für das im Wärmeaustauscher (23) kondensierte Wasser zur Eintrittsöffnung (13),
dadurch gekennzeichnet, dass die Vorrichtung weiterhin enthält
c) eine mit dem Dampf-/Wasserabscheider (22), der Dampfleitung (7) und/oder dem Wärmeaustauscher (23) hydraulisch verbundene Vakuumleitung (9), die an eine Vakuum erzeugende Einrichtung angeschlossen sein kann, wobei die Vakuumleitung (9) verschließbar ist, sowie
d) wenigstens eine im Wasserkreislauf (26) oder im Kühlmittelraum (27) angeordnete Überwachungseinrichtung (24, 25), mit welcher ein Übertritt von Phosgen in den Wasserkreislauf (26) oder den Kühlmittelraum (27) detektiert werden kann.

Bevorzugt ist der Wärmeaustauscher dabei oberhalb des Rohrbündelreaktors angeordnet, so dass das kondensierte Wasser aufgrund der Schwerkraft in den Kühlmittelraum des Rohrbündelreaktors zurückfließen kann.

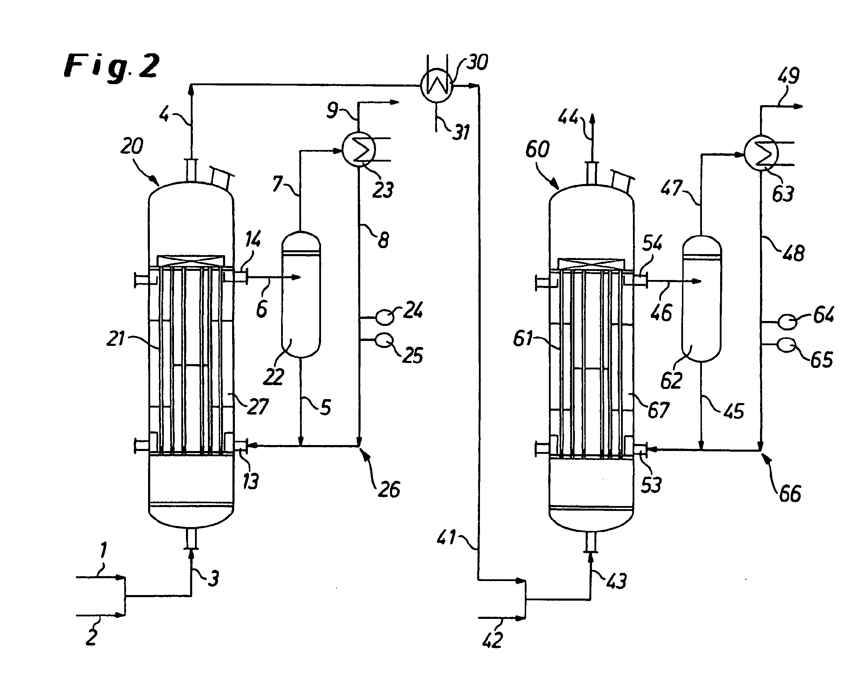

Als Rohrbündelreaktor werden dabei bevorzugt technisch übliche, stehende Rohrbündelreaktoren mit einer Rohrzahl von bevorzugt 100 bis 10000, besonders bevorzugt 300 bis 3000 eingesetzt. Die Reaktorrohre haben dabei bevorzugt eine Länge von 1 bis 6, besonders bevorzugt von 2 bis 4 m und einen inneren Rohrdurchmesser von bevorzugt 20 bis 100, besonders bevorzugt von 30 bis 70 mm. Dabei können nur ein einzelner Rohrbündelreaktor eingesetzt werden oder auch mehrere, bevorzugt zwei bis drei, Rohrbündelreaktoren parallel oder seriell miteinander verschaltet werden. Eine derartige serielle Verschaltung ist in Figur 2 dargestellt.

Die Anordnung der Reaktionsrohre innerhalb des Rohrbündelreaktors wird bevorzugt in Dreiecksteilung vorgenommen. Weiterhin werden bevorzugt, vor allem bei Reaktoren großer Länge und Rohrzahl, im Kühlmittelraum Strömungsumrichter, beispielsweise Umlenkbleche, im Abstand von 200 bis 2000 mm, besonders bevorzugt 800 bis 1200 mm, angebracht. Ferner wird vor allem bei großen Einheiten bevorzugt im Bereich der Eintrittsöffnung in den Kühlmittelraum und der Austrittsöffnung aus dem Kühlmittelraum jeweils ein Ringkanal zur Vergleichmäßigung der Strömung eingebaut. Im Bereich des Gaseintritts in den Rohrbündelreaktor können ferner geeignete Einbauten zur Gasverteilung, wie Prallplatten oder Statikmischelemente, vorgesehen werden.

Der Reaktor kann aus Kohlenstoffstahl oder unterschiedlichen Chrom-Nickelstählen oder sonstigen höher legierten Stählen gebaut werden. Obwohl die Produkttemperatur in den Reaktionsrohren über 200°C erreicht, wird überraschenderweise selbst bei Kohlenstoffstahl keine Korrosion beobachtet, weswegen dieser Werkstoff aus wirtschaftlichen Gründen bevorzugt ist.

Die Reaktionsrohre sind mit Aktivkohle befüllt, wobei handelsübliche extrudierte Formkohlen einer Korngröße von z. B. 2 bis 4 mm bevorzugt sind. Der unterste Bereich der Reaktionsrohre ist dabei bevorzugt zunächst in einer Höhe von 100 bis 500 mm mit einer katalytisch inaktiven Füllung, wie Keramikfüllkörper oder Metallfüllkörper gefüllt, auf die dann die Aktivkohle eingefüllt wird. Auf der Gasaustrittsseite aus den Reaktionsrohren werden bevorzugt geeignete Maßnahmen zum Niederhalten der Aktivkohle vorgesehen, z. B. ein Niederhalterrost, eine weitere inerte Schüttung auf dem Rohrboden oder, bevorzugt, eine Schüttung der gleichen Aktivkohle oberhalb des Rohrbodens in einer Höhe von 100 bis 500 mm.

Diese Rohrbündelreaktoren sind für die Durchführung des erfindungsgemäßen Verfahrens gut geeignet.

Als Wärmeaustauscher können übliche Rohrbündelwärmeaustauscher mit Kühlwasser oder Luftkondensatoren oder andere dem Fachmann bekannte Kondensatoren eingesetzt werden. Als Vakuum erzeugende Einrichtungen können handelsübliche Vakuumpumpen wie Kolbenpumpen, Gebläse oder Ringflüssigkeitspumpen, aber auch Vakuumstrahler mit Dampf , Luft oder Stickstoff als Treibmittel eingesetzt werden.

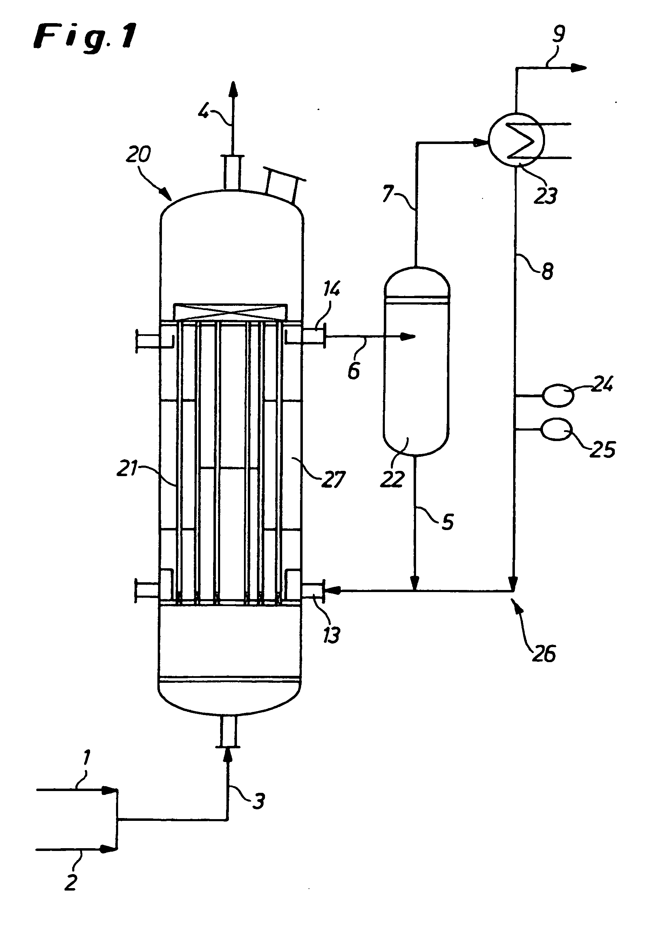

Zur Absicherung des Systems im Schadensfall (vor allem durch Korrosion an den Reaktionsrohren) können verschiedene Überwachungseinrichtungen eingesetzt werden. Diese Überwachungseinrichtungen beenden bevorzugt bei Überschreiten einer vorgegebenen Auslöseschwelle die Reaktion, bevorzugt durch Absperren der Zufuhr der Reaktanten, und überführen die Vorrichtung in einen sicheren Zustand. Geeignete Überwachungseinrichtungen detektieren beispielsweise Druck und/oder Temperatur des Kühlwassers oder Dampfs, zeigen diese an und lösen bei Überschreiten vorgegebener Auslöseschwellen einen Alarm aus und/oder bringen die erfindungsgemäße Vorrichtung in einen sicheren Betriebs- oder Ruhezustand. Ebenfalls geeignete Messgrößen, die anstelle von oder zusätzlich zu Druck und/oder Temperatur überwacht werden können, sind beispielsweise die Leitfähigkeit oder der pH-Wert des Wassers. Ebenfalls geeignet als Überwachungseinrichtungen sind Analysatoren auf Spuren von Phosgen im Gasraum der Dampfleitungen (Dampfleitungen 7 bzw. 47 in den Figuren 1 und 2). Die Überwachungseinrichtungen werden dabei bevorzugt in diversitär redundanter Form installiert.

Das erfindungsgemäße Verfahren und die erfindungsgemäße Vorrichtung haben gegenüber den aus dem Stand der Technik bekannten Verfahren bzw. Vorrichtungen die folgenden wesentlichen Vorteile:

Sie sind einfach aufgebaut und benötigen, anders als durch direkte Kühlung mit Flüssigkeiten ohne Verdampfung betriebene Systeme, keine Kühlmittelpumpen. Bei Einsatz eines Luftkondensators ist das Kühlsystem auch bei Energieausfall eigensicher. Die erzielten Wärmeübergangszahlen liegen im Bereich 1000 bis 1500 W/ m²K und somit wesentlich höher als die mit Flüssigkeitskühlung erzielten. Zusammen mit der hohen Zuverlässigkeit des Kühlsystems ist es möglich, ohne Auftreten von Korrosion das System aus Kohlenstoffstahl zu bauen. Es liefert ein Phosgen mit niedrigem Chlorgehalt, der sogar unter 20 ppm gehalten werden kann, was besondere Reinheit der Folgeprodukte (z. B. der damit hergestellten Isocyanate) ergibt. Durch die redundanten Überwachungssysteme ist das Verfahren darüber hinaus auch besonders sicher im Betrieb.

Die Erfindung wird nachstehend anhand der Figuren näher erläutert. Es zeigen:
- Figur 1: eine erfindungsgemäße Vorrichtung zur Durchführung des erfindungsgemäßen Verfahrens mit nur einem Rohrbündelreaktor
- Figur 2: eine erfindungsgemäße Vorrichtung mit zwei in Serie geschalteten Rohrbündelreaktoren
- Figur 3: eine Rohrbündelreaktor zum Einsatz in dem erfindungsgemäßen Verfahren

Figur 1 zeigt eine erfindungsgemäße Vorrichtung zur Durchführung des erfindungsgemäßen Verfahrens. Dabei werden die Edukte CO und Chlor über zugeordnete Leitungen 1 und 2 dosierend gefördert und anschließend vermischt. Dies kann in einem speziellen Gasmischer, z. B. einem Blendenmischer oder Düsenmischer, erfolgen oder kann bei ausreichender Länge der Eintrittsrohrleitung auch spontan erfolgen. Das Gasgemisch tritt anschließend durch Rohrleitung 3 von unten in den Rohrbündelreaktor 20 ein, dessen Rohre 21 mit Aktivkohle gefüllt sind und in denen die Reaktion zu dem Verfahrensprodukt Phosgen erfolgt. Das Phosgen wird über Rohrleitung 4 aus dem Rohrbündelreaktor abgezogen. Zur Abfuhr der Reaktionswärme tritt Wasser durch Eintrittsöffnung 13 in den Kühlmittelraum 27 des Reaktors von unten flüssig ein, siedet im Reaktor und tritt als Dampf/ Wassergemisch durch die Austrittsöffnung 14 wieder aus und gelangt über Leitung 6 zum Dampf-/Wasserabscheider 22. Die flüssigen Wasseranteile werden im Dampf-/Wasserabscheider 22 abgetrennt. Der Dampf wird über Leitung 7 zum Wärmeaustauscher 23 (einem Kondensator) transportiert und darin kondensiert. Der Kondensatstrom läuft über Rückführleitung 8 wieder zur Eintrittsöffnung 13 zurück. Auch der im Dampf-/Wasserabscheider gewonnen flüssige Wasserstrom läuft über Rückführungsleitung 5 zur Eintrittsöffnung 13 zurück. In der hier dargestellten Ausführungsform werden die Rückführungsleitungen 5 und 8 vor der Eintrittsöffnung 13 zusammengeführt und als eine gemeinsame Leitung bis zur Eintrittsöffnung 13 geführt.

In der Rückführungsleitung 8 sind Überwachungseinrichtungen 24 und 25 zur Überwachung von Druck und Temperatur angeordnet, die eine Detektion eines Phosgenübertritts von den Reaktionsrohren 21 in den Wasserkreislauf 26 erlauben.

Im Normalbetrieb ist der Wasserkreislauf 26 hermetisch verschlossen. Bei Bedarf kann der Wasserkreislauf 26 aber mit einem Vakuumerzeuger über Vakuumleitung 9 auf das Betriebsvakuum gebracht werden, wobei dann über Vakuumleitung 9 ein Inertgas-Strom aus dem Wasserkreislauf 26 austritt.

Das Kühlmittelsystem der in Figur 1 dargestellten Vorrichtung besteht aus dem Kühlmittelraum 27 und dem daran über die Eintrittsöffnung 13 und die Austrittsöffnung 14 angeschlossenen Wasserkreislauf 26. Der Wasserkreislauf 26 umfasst dabei Leitung 6, den Dampf-/Wasserabscheider 22, Dampfleitung 7, den Wärmeaustauscher 23 sowie die Rückführleitungen 5 und 8.

Nach dem Befüllen mit Wasser wird das Kühlmittelsystem über Vakuumleitung 9 evakuiert. Es kann dann vom Vakuumaggregat abgetrennt und so als geschlossenes System betrieben werden. Bei längerem Betrieb kann durch Kleinleckagen an Dichtungen der Systemdruck langsam ansteigen, so dass gelegentliches Nachevakuieren erforderlich wird. Natürlich kann der erforderliche Unterdruck auch durch fortlaufendes Evakuieren erzielt werden. Die Befüllung des Wasserkreislaufs kann beispielsweise durch einen in den Leitungen 5 oder 8 vorgesehenen Anschluss an eine Wasserzufuhr erfolgen.

In Figur 2 ist eine alternative erfindungsgemäße Ausführungsform dargestellt, in der die Phosgenherstellung zweistufig ausgeführt ist. Hierbei bedeuten die entsprechenden Referenznummern die gleichen Anlagenteile wie in Figur 1. Die Ausgangsstoffe CO und Chlor werden über zugeordnete Rohrleitungen 1 und 2 dosierend gefördert und anschließend vermischt. Das Gasgemisch wird durch Rohrleitung 3 von unten in den Rohrbündelreaktor 20, die erste Reaktionsstufe, eingeführt, dessen Reaktionsrohre 21 mit Aktivkohle gefüllt sind und in denen die erste Stufe der Reaktion zu Phosgen erfolgt. Das entstandene Phosgen wird über Leitung 4 abgezogen und in Kondensator 30 auskondensiert. Der flüssige Phosgenstrom wird als Wertstoff über Leitung 31 abgezogen, der restliche Gasstrom wird über Leitung 41 der zweiten Stufe zugeführt und dort mit Chlor, das über Leitung 42 gefördert wird, vermischt. Das Gasgemisch wird dann über Leitung 43 in den Rohrbündelreaktor 60 geleitet, in den Reaktionsrohren 61 umgesetzt und das erzeugte Phosgen anschließend über Leitung 44 abgezogen. In der zweiten Stufe laufen im Wesentlichen die gleichen Prozesse ab wie bereits in der ersten Stufe. Zur Abfuhr der Reaktionswärme tritt Wasser durch Eintrittsöffnung 53 in den Kühlmittelraum 67 des Reaktors von unten flüssig ein, siedet im Reaktor und tritt als Dampf/ Wassergemisch durch die Austrittsöffnung 54 wieder aus und gelangt über Leitung 46 zum Dampf-/Wasserabscheider 62. Die flüssigen Wasseranteile werden im Dampf-/WasserabscheiderAbscheider 62 abgetrennt. Der Dampf wird über Leitung 47 zum Wärmeaustauscher 63 (einem Kondensator) transportiert und darin kondensiert. Der Kondensatstrom läuft über Rückführleitung 48 wieder zur Eintrittsöffnung 53 zurück. Auch der im Dampf-/Wasserabscheider 62 gewonnen flüssige Wasserstrom läuft über Rückführungsleitung 45 zur Eintrittsöffnung 53 zurück. In der hier dargestellten Ausführungsform werden die Rückführungsleitungen 45 und 48 vor der Eintrittsöffnung 53 zusammengeführt und als eine gemeinsame Leitung bis zur Eintrittsöffnung 53 geführt.

In der Rückführungsleitung 48 sind Leckageüberwachungseinrichtungen 64 und 65 zur Überwachung von Druck und Temperatur angeordnet.

Im Normalbetrieb ist der Wasserkreislauf 66 hermetisch verschlossen. Bei Bedarf kann der Wasserkreislauf 66 aber mit dem Vakuumerzeuger über Vakuumleitung 49 auf das Betriebsvakuum gebracht werden, wobei dann über Vakuumleitung 49 ein Inertgas-Strom aus dem Wasserkreislauf 66 austritt.

In der zweiten Stufe wird der restliche Gasstrom aus Leitung 41, der als Hauptbestandteil CO in einer Konzentration von 30 bis 70 Gew.% enthält, mit soviel Chlor aus Leitung 42 vermischt, dass ein molarer CO-Überschuss von 5 bis 20 % erzielt wird, und das Gasgemisch in Leitung 43 von unten in den Rohrbündelreaktor 60 der zweiten Stufe eingeführt, dessen Rohre mit Aktivkohle gefüllt sind und in denen die zweite Stufe der Reaktion zu Phosgen erfolgt. Durch diese zweistufige Verfahrensweise wird das eingesetzte CO maximal genutzt und es wird ein signifikanter CO-Anteil im Phosgen vermieden. Der Rohrbündelreaktor 60 und der Wasserkreislauf 66 ist von der Funktion her identisch zum Rohrbündelreaktor 20 und dem Wasserkreislauf 26 der ersten Stufe, sie können aber ggf. wegen der geringeren Gasbelastung kleiner ausgelegt sein. Es kann aber auch vorteilhaft sein, beide Systeme identisch auszulegen, so dass das System der zweiten Stufe als Reservesystem der ersten Stufe dienen kann, wenn dieses, z. B. wegen Katalysatorwechsels, zeitweilig außer Betrieb ist.

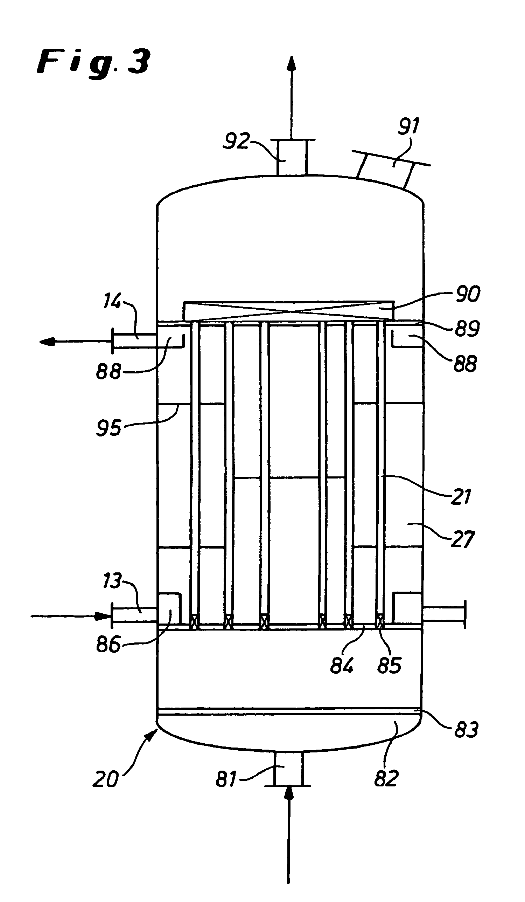

Figur 3 zeigt einen Rohrbündelreaktor 20, der in dem erfindungsgemäßen Verfahren und der erfindungsgemäßen Vorrichtung eingesetzt werden kann. Er umfasst eine Gaseintrittsöffnung 81, eine untere Haube 82, Einbauten 83 zur Gasverteilung, einen unteren Rohrboden 84, eine Schüttung 85 aus Inertmaterial, einen unteren Ringkanal 86 im Bereich der Eintrittsöffnung 13 in den Kühlmittelraum 27, die Reaktionsrohre 21, einen oberen Ringkanal 88 im Bereich der Austrittsöffnung 14 aus dem Kühlmittelraum 27, einen oberen Rohrboden 89, eine Schüttung 90 oberhalb des oberen Rohrbodens 89, ein Einstiegsloch 91 für den Einstieg in den Reaktor für Reparatur- oder Wartungsarbeiten, eine Gasaustrittsöffnung 92 für den Austritt von Phosgen sowie Umlenkelemente 95 für die Umlenkung der Strömung im Kühlmittelraum 27.

## Patentansprüche

1. Verfahren zur Herstellung von Phosgen, bei dem Chlor und Kohlenmonoxid in Gegenwart eines Aktivkohle-Katalysators in einem Rohrbündelreaktor enthaltend mehrere Reaktionsrohre und einen die Reaktionsrohre umgebenden Kühlmittelraum umgesetzt werden, **dadurch gekennzeichnet, dass**
a) die Reaktionsrohre von außen durch den Kühlmittelraum mit Wasser durch Verdampfungskühlung gekühlt werden, und
b) die Reaktionsrohre bei einem Druck betrieben werden, der oberhalb des Drucks in dem Kühlmittelraum liegt.

2. Verfahren nach Anspruch 1, **dadurch gekennzeichnet, dass** Kohlenmonoxid mit einem molaren Überschuss von 2 bis 20 % bezogen auf die eingesetzte Menge an Chlor eingesetzt wird.

3. Verfahren nach Anspruch 1 oder 2, **dadurch gekennzeichnet, dass** der absolute Druck im Kühlmittelraum 0,1 bis 0,8 bar, bevorzugt 0,15 bis 0,5 bar, beträgt.

4. Verfahren nach einem der Ansprüche 1 bis 3, **dadurch gekennzeichnet, dass** der in Schritt a) im Kühlmittelraum verdampfte Dampf, gegebenenfalls nach Abtrennung von flüssigem Wasser, in einem Wärmeaustauscher wieder kondensiert wird und das kondensierte Wasser anschließend wieder zum Kühlmittelraum zurückgeleitet wird.

5. Verfahren nach Anspruch 4, **dadurch gekennzeichnet, dass** der Wärmeaustauscher oberhalb des Rohrbündelreaktors angeordnet ist und das kondensierte Wasser aufgrund der Schwerkraft in den Kühlmittelraum des Rohrbündelreaktors zurückfließt.

6. Verfahren nach Anspruch 5, **dadurch gekennzeichnet, dass** der Kühlmittelkreislauf geschlossen ist.

7. Vorrichtung zur Herstellung von Phosgen durch Umsetzung von Chlor und Kohlenmonoxid in Gegenwart eines Aktivkohle-Katalysators, enthaltend
a) einen Rohrbündelreaktor (20, 60), der mehrere im Wesentlichen parallel zueinander angeordnete Reaktionsrohre (21, 61), einen die Reaktionsrohre (21, 61) umgebenden Kühlmittelraum (27, 67) für Wasser mit mindestens einer Eintrittsöffnung (13, 53) für Wasser und mindestens einer Austrittsöffnung (14, 54) für Wasser bzw. Wasserdampf umfasst, sowie
b) einen Wasserkreislauf (26, 66) umfassend einen mit der Austrittsöffnung (14, 54) über eine Leitung (6, 46) hydraulisch verbundenen Dampf-/Wasserabscheider (22, 62), eine Rückführungsleitung (5, 45) für das im Dampf-/Wasserabscheider (22, 62) abgeschiedene Wasser zur Eintrittsöffnung (13, 53), einen Wärmeaustauscher (23, 63), der über eine Dampfleitung (7, 47) hydraulisch mit dem Dampf-/Wasserabscheider (22, 62) verbunden ist und in dem der im Dampf-/Wasserabscheider (22, 62) abgeschiedene Dampf kondensiert wird, sowie eine Rückführungsleitung (8, 48) für das im Wärmeaustauscher (23, 63) kondensierte Wasser zur Eintrittsöffnung (13, 53),
**dadurch gekennzeichnet, dass** die Vorrichtung weiterhin enthält
c) eine mit dem Dampf-/Wasserabscheider (22, 62), der Dampfleitung (7, 47) und/oder dem Wärmeaustauscher (23, 63) hydraulisch verbundene Vakuumleitung (9, 49), die an eine Vakuum erzeugende Einrichtung angeschlossen sein kann, wobei die Vakuumleitung (9, 49) verschließbar ist, sowie
d) wenigstens eine im Wasserkreislauf (26, 66) oder im Kühlmittelraum (27, 67) angeordnete Überwachungseinrichtung (24, 25, 64, 65), mit welcher ein Übertritt von Phosgen in den Wasserkreislauf (26, 66) oder den Kühlmittelraum (27, 67) detektiert werden kann.

8. Vorrichtung nach Anspruch 7, **dadurch gekennzeichnet, dass** der Wärmeaustauscher (23, 63) oberhalb des Rohrbündelreaktors (20, 60) angeordnet ist, so dass das kondensierte Wasser aufgrund der Schwerkraft in den Kühlmittelraum (27, 67) des Rohrbündelreaktors (20, 60) zurückfließen kann.

9. Vorrichtung nach einem der Ansprüche 7 oder 8, **dadurch gekennzeichnet, dass** die Überwachungseinrichtungen (24, 25, 64, 65) Druck und/oder Temperatur und/oder Leitfähigkeit und/oder pH-Wert und/oder das Auftreten von Spuren von Phosgen überwachen.

## Claims

1. Process for preparing phosgene, in which chlorine and carbon monoxide are converted in the presence of an activated carbon catalyst in a tube bundle reactor comprising a plurality of reaction tubes and a coolant space surrounding the reaction tubes, **characterized in that**
a) the reaction tubes are cooled externally by the coolant space with water by evaporative cooling, and
b) the reaction tubes are operated at a pressure above the pressure in the coolant space.

2. Process according to Claim 1, **characterized in that** carbon monoxide is used with a molar excess of 2 to 20% based on the amount of chlorine used.

3. Process according to Claim 1 or 2, **characterized in that** the absolute pressure in the coolant space is 0.1 to 0.8 bar, preferably 0.15 to 0.5 bar.

4. Process according to any of Claims 1 to 3, **characterized in that** the vapour evaporated in the coolant space in step a), optionally after removing liquid water, is condensed again in a heat exchanger, and the condensed water is subsequently passed back to the coolant space.

5. Process according to Claim 4, **characterized in that** the heat exchanger is arranged above the tube bundle reactor, and the condensed water flows back into the coolant space of the tube bundle reactor owing to gravity.

6. Process according to Claim 5, **characterized in that** the coolant circuit is closed.

7. Apparatus for preparing phosgene by converting chlorine and carbon monoxide in the presence of an activated carbon catalyst, comprising
a) a tube bundle reactor (20, 60) which comprises a plurality of_reaction tubes (21, 61) arranged essentially parallel to one another, a coolant space (27, 67) for water which surrounds the reaction tubes (21, 61) and has at least one inlet orifice (13, 53) for water and at least one outlet orifice (14, 54) for water or water vapour, and
b) a water circuit (26, 66) comprising a steam/water separator (22, 62) hydraulically connected to the outlet orifice (14, 54) via a line (6, 46), a recycle line (5, 45) for the water separated out in the steam/water separator (22, 62) to the inlet orifice (13, 53), a heat exchanger (23, 63) which is hydraulically connected to the steam/water separator (22, 62) via a steam line (7, 47) and in which the steam separated out in the steam/water separator (22, 62) is condensed, and a recycle line (8, 48) for the water condensed in the heat exchanger (23, 63) to the inlet orifice (13, 53),
**characterized in that** the apparatus further comprises
c) a vacuum line (9, 49) which is hydraulically connected to the steam/water separator (22, 62), the steam line (7, 47) and/or the heat exchanger (23, 63), and may be attached to a vacuum-generating device, the vacuum line (9, 49) being closable, and
d) at least one monitoring device (24, 25, 64, 65) arranged in the water circuit (26, 66) or in the coolant space (27, 67), with which passage of phosgene into the water circuit (26, 66) or the coolant space (27, 67) can be detected.

8. Apparatus according to Claim 7, **characterized in that** the heat exchanger (23, 63) is arranged above the tube bundle reactor (20, 60), such that the condensed water can flow back into the coolant space (27, 67) of the tube bundle reactor (20, 60) owing to gravity.

9. Apparatus according to either of Claims 7 and 8, **characterized in that** the monitoring devices (24, 25, 64, 65) monitor pressure and/or temperature and/or conductivity and/or pH and/or the occurrence of traces of phosgene.

## Revendications

1. Procédé pour la préparation de phosgène, dans lequel on fait réagir du chlore et du monoxyde de carbone en présence d'un catalyseur de charbon actif dans un réacteur à faisceau de tubes contenant plusieurs tubes de réaction et un espace d'agent réfrigérant entourant les tubes de réaction, **caractérisé en ce que**
a) les tubes de réaction sont refroidis de l'extérieur par l'espace d'agent réfrigérant avec de l'eau par refroidissement par évaporation, et
b) les tubes de réaction fonctionnent à une pression qui est supérieure à la pression dans l'espace d'agent réfrigérant.

2. Procédé selon la revendication 1, **caractérisé en ce que** l'on utilise du monoxyde de carbone dans un excès molaire de 2 à 20 % rapporté à la quantité de chlore utilisé.

3. Procédé selon la revendication 1 ou 2, **caractérisé en ce que** la pression absolue dans l'espace d'agent réfrigérant est de 0,1 à 0,8 bar, de préférence de 0,15 à 0,5 bar.

4. Procédé selon l'une quelconque des revendications 1 à 3, **caractérisé en ce que** la vapeur évaporée dans l'étape a) dans l'espace d'agent réfrigérant, est à nouveau condensée dans un échangeur de chaleur éventuellement après séparation d'eau liquide et l'eau condensée est ensuite à nouveau renvoyée dans l'espace d'agent réfrigérant.

5. Procédé selon la revendication 4, **caractérisé en ce que** l'échangeur de chaleur est disposé au-dessus du réacteur à faisceau de tubes et l'eau condensée est renvoyée sous l'effet de la force de gravité dans l'espace d'agent réfrigérant du réacteur à faisceau de tubes.

6. Procédé selon la revendication 5 **caractérisé en ce que** la circulation d'agent réfrigérant est fermée.

7. Dispositif pour la préparation de phosgène par réaction de chlore et de monoxyde de carbone en présence d'un catalyseur de charbon actif contenant
a) un réacteur à faisceau de tubes (20, 60), lequel comprend plusieurs tubes de réaction disposés essentiellement parallèlement les uns par rapport aux autres (21, 61), un espace d'agent réfrigérant (27, 67) entourant les tubes de réaction (21, 61) pour de l'eau avec au moins une ouverture d'entrée (13, 53) pour l'eau et au moins une ouverture de sortie (14, 54) pour l'eau respectivement la vapeur d'eau, ainsi que
b) une circulation d'eau (26, 66) comprenant un séparateur de vapeur/ eau lié hydrauliquement à l'ouverture de sortie (14, 54) par l'intermédiaire d'une canalisation (6, 46), une canalisation de retour (5, 45) pour l'eau séparée dans le séparateur de vapeur/eau (22, 62) vers l'ouverture d'entrée (13, 53), un échangeur de chaleur (23, 63) qui est hydrauliquement lié au séparateur de vapeur/eau (22, 62) par l'intermédiaire d'une canalisation de vapeur (7, 47) et dans lequel la vapeur séparée dans le séparateur de vapeur/eau (22, 62) est condensée, ainsi qu'une canalisation de retour (8, 48) pour l'eau condensée dans l'échangeur de chaleur (23, 63) vers l'ouverture d'entrée (13, 53),
**caractérisé en ce que** le dispositif contient de plus
c) une canalisation de vide (9, 49) liée hydrauliquement au séparateur de vapeur/eau (22, 62), la canalisation de vapeur (7, 47) et/ou l'échangeur de chaleur (23, 63), laquelle peut être raccordée à un dispositif générant un vide, la canalisation de vide (9, 49) pouvant être fermée, ainsi que
d) au moins un dispositif de surveillance (24, 25, 64, 65) disposé dans la circulation d'eau (26, 66) ou dans l'espace d'agent réfrigérant (27, 67), avec lequel on peut détecter une entrée de phosgène dans la circulation d'eau (26, 66) ou dans l'espace d'agent réfrigérant (27, 67).

8. Dispositif selon la revendication 7, **caractérisé en ce que** l'échangeur de chaleur (23, 63) est disposé au-dessus du réacteur à faisceau de tubes (20, 60), de telle sorte que l'eau condensée peut être renvoyée sous l'effet de la force de gravité dans l'espace d'agent réfrigérant (27, 67) du réacteur à faisceau de tubes (20, 60).

9. Dispositif selon l'une quelconque des revendications 7 ou 8, **caractérisé en ce que** les dispositifs de surveillance (24, 25, 64, 65) surveillent la pression et/ou la température et/ou la conductivité et/ou la valeur du pH et/ou l'apparition de traces de phosgène.
